# EUROPÄISCHE PATENTSCHRIFT

(11) **EP 0 445 591 B1**
(45) Veröffentlichungstag und Bekanntmachung des Hinweises auf die Patenterteilung: **14.12.1994**
(21) Anmeldenummer: 91102522.9
(22) Anmeldetag: 21.02.1991
(51) Int. Cl.: B62D 1/20

(54) **Einrichtung zum Verbinden einer Lenksäule eines Kraftfahrzeuges mit einem Wellenzapfen eines Lenkgetriebes**
Device for connecting a steering column of a motor vehicle to the stub shaft of a steering gear
Dispositif d'accouplement pour une colonne de direction d'un véhicule automobile avec la queue de l'arbre d'un mécanisme de direction

(30) Priorität: 03.03.1990 DE 4006787
(43) Veröffentlichungstag der Anmeldung: 11.09.1991
(73) Patentinhaber: Etablissement Supervis, FL-9490 Vaduz (LI)
(72) Erfinder: Oertle, Max, Fl-9493 Mauren (LI); Miescher, Stefan, Fl-9494 Schaan (LI)
(74) Vertreter: Hefel, Herbert, Dipl.-Ing.

(56) Entgegenhaltungen:
- EP-A- 0 292 442
- EP-A- 0 300 854
- EP-A- 0 319 149
- EP-A- 0 323 298
- DE-A- 3 226 981
- FR-A- 2 620 997
- US-A- 4 012 155

## Beschreibung

Die Erfindung bezieht sich auf eine Einrichtung zum Verbinden einer Lenksäule eines Kraftfahrzeuges mit einem Wellenzapfen eines Lenkgetriebes nach den Merkmalen des Oberbegriffes des Patentanspruches 1.

Aus der EP-A-323 298 ist eine Einrichtung dieser Art bekannt. Zur Fixierung der Verbindung ist hier eine Spannschraube vorgesehen, und der Riegelbolzen besitzt eine als Gewindebohrung ausgebildete Längsbohrung für die Aufnahme des Gewindes dieser Spannschraube. Ist das U-förmige Kupplungsstück auf dem Wellenzapfen des Lenkgetriebes aufgeschwenkt, so ist darauf zu achten, bevor die Spannschraube festgezogen wird, daß der Wellenzapfen zwischen den Seitenwangen und dem Steg des U-förmigen Kupplungsstückes seine vorgesehene Lage tatsächlich eingenommen hat, was ja allein aufgrund der konstruktiven Gegebenheiten nicht sichergestellt ist. Ferner ist hier als Feder eine Blattfeder vorgesehen, die kreuzförmig gestaltet ist, wobei die freien Enden der Arme dieses Kreuzes mehrfache Umbiegungen besitzen. Diese kreuzförmig gestaltete, dreidimensionale Blattfeder wird außen auf das Kupplungsstück aufgesteckt, auf dem sie sich durch die erwähnten Umbiegungen ihrer Arme von selbst hält. Diese Konstruktion ist nicht zweckmäßig. Bei der Feder handelt es sich um einen konstruktiv aufwendigen Teil, der eine Sonderanfertigung darstellt, und die Anordnung dieser Blattfeder am Kupplungsstück wird deswegen als nachteilig betrachtet, da doch nicht auszuschließen ist, daß die Feder, wenn sie nicht sehr sorgfältig montiert ist, allzu leicht verloren geht, auch wenn es sich hier nur um eine Montagehilfe handelt.

Eine andere Einrichtung dieser Art ist aus der FR-A-2 620 997 bekannt, bei dieser Einrichtung ist vorgesehen, daß die Spannschraube mit einem Ring ausgestattet wird, der vorerst in einer außen liegenden Büchse sozusagen bevorratet wird. Dieser Ring ist mit einer Art Bremse vorerst mit dieser Spannschraube fest verbunden und über einen nachgiebigen Bolzen in der erwähnten Büchse zusammen mit der Schraube festgehalten. Nach dem Einlegen des Getriebeklobens wird die Spannschraube gegen die Mutter gedrückt, wobei die Haltekraft des elastischen Bolzens überwunden wird, so daß der Ring mit der Spannschraube gegen die Mutter wandert. Beim anschließenden Eindrehen der Schraube in die Mutter wird die Haltekraft des Bremsringes überwunden, so daß der Ring in eine Haltestellung relativ zur Spannschraube kommt. Diese vorbekannte Konstruktion kann zwar die ihr zugedachte Aufgabe ohne Zweifel erfüllen, sie ist jedoch aufgrund der großen Zahl der hier notwendigen Bauteile doch relativ aufwendig und teuer.

Von diesem Stand der Technik geht die Erfindung aus, und sie zielt darauf ab, diese bekannten Konstruktionen dahingehend zu verbessern, daß die Montage erleichtert wird, eventuell sogar automatisiert werden kann und daß aufgrund der konstruktiven Gestaltung der zu vereinigenden Teile sichergestellt ist, daß diese ihre funktionsgerechte Lage relativ zueinander sozusagen von selbst einnehmen. Ferner soll die Einrichtung möglichst wenig Bauteile aufweisen. Nach einer weiteren Aufgabe der Erfindung soll die Konstruktion so gestaltet sein, daß für sie eine handelsübliche Feder eingesetzt werden kann. Zur Lösung der ersterwähnten Aufgabe schlägt die Erfindung nun jene Maßnahmen vor, die Inhalt und Gegenstand der Merkmale nach dem kennzeichnenden Teil des Patentanspruches 1 sind.

Anhand der Zeichnung werden Ausführungsbeispiele der Erfindung erläutert, wobei zweckmäßige und vorteilhafte Ausgestaltungen im folgenden beschrieben und auch dargestellt sind. Es zeigen:
- Fig. 1: in Schrägsicht und nach Art einer Explosionszeichnung die miteinander zu verbindenden Teile;
- Fig. 2: eine Ansicht des Kupplungsteiles von unten gesehen;
- Fig. 3: von der Stirnseite her gesehen (Pfeil A in Fig. 1);
- Fig. 4: ein Detail im Längsschnitt (Schnittlinie IV-IV in Fig. 1) und in einem gegenüber den Fig. 2 und 3 vergrößerten Maßstab;
- Fig. 5: den Riegelbolzen in Ansicht;
- Fig. 6: eine Sicht des Kupplungsstückes wie in Fig. 3, jedoch mit eingefügtem Wellenzapfen des Lenkgetriebes, z. T. im Schnitt;
- Fig. 7: einen Schnitt durch das Kupplungsstück während der Montage, Blickrichtung wie in Fig. 6. Fig. 8 veranschaulicht in der Sicht nach Fig. 3 ein weiteres Kupplungsstück mit eingelegtem Wellenzapfen für automatische Montage.

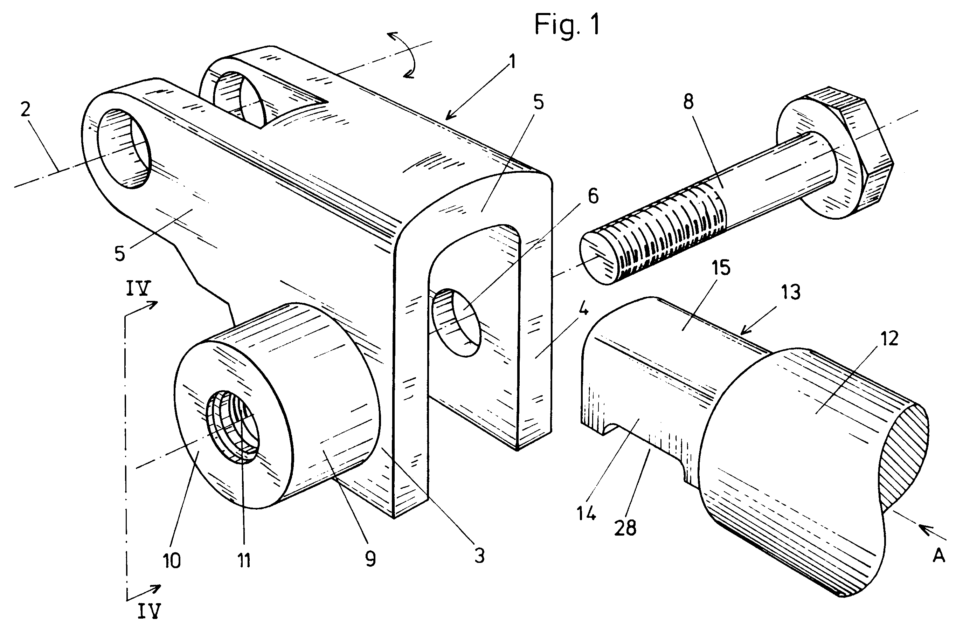

Fig. 1 zeigt in Schrägsicht und nach Art einer Explosionszeichnung die wesentlichen Elemente der hier in Rede stehenden Verbindung. Am Ende einer nicht dargestellten Lenksäule oder Lenkwelle ist - beispielsweise als Teil eines Kardangelenkes - ein Kupplungsstück 1 angelenkt, das um seine Querachse 2 schwenkbar ist. Dieses Kupplungsstück 1 besitzt einen U-förmigen Querschnitt mit den Seitenwangen 3 und 4 und einen diese Seitenwangen verbindenden, hier gewölbten Steg 5. In den beiden Seitenwangen 3 und 4 sind fluchtend zueinander liegende Bohrungen 6 und 7 vorgesehen, von welchen hier in der Darstellung nach Fig. 1 allerdings nur die eine Bohrung 6 in der Seitenwange 4 zu sehen ist. Diese Bohrungen dienen zur Aufnahme einer Spannschraube 8. Die nicht sichtbare Bohrung 7 in der Seitenwange 3 ist von einer außenseitig liegenden Buchse 9 überdeckt, in deren Boden 10 eine Gewindebohrung 11 eingearbeitet ist. Dieses Kupplungsstück 1 hat den Abschnitt 13 eines Wellenzapfens 12 eines hier nicht dargestellten Lenkgetriebes aufzunehmen. Der Abschnitt 13 des Wellenzapfens 12 ist von drei rechtwinklig zueinander stehenden, Flächen 14 und einer in etwa korrespondierend zur Wölbung des Steges 15 bombierten Fläche 15 begrenzt, wobei die der bombierten Fläche 15 gegenüberliegende Fläche einen Einzug 28 aufweist, der in Verbindung mit der Spannschraube 8 eine mechanische Sicherung darstellt.

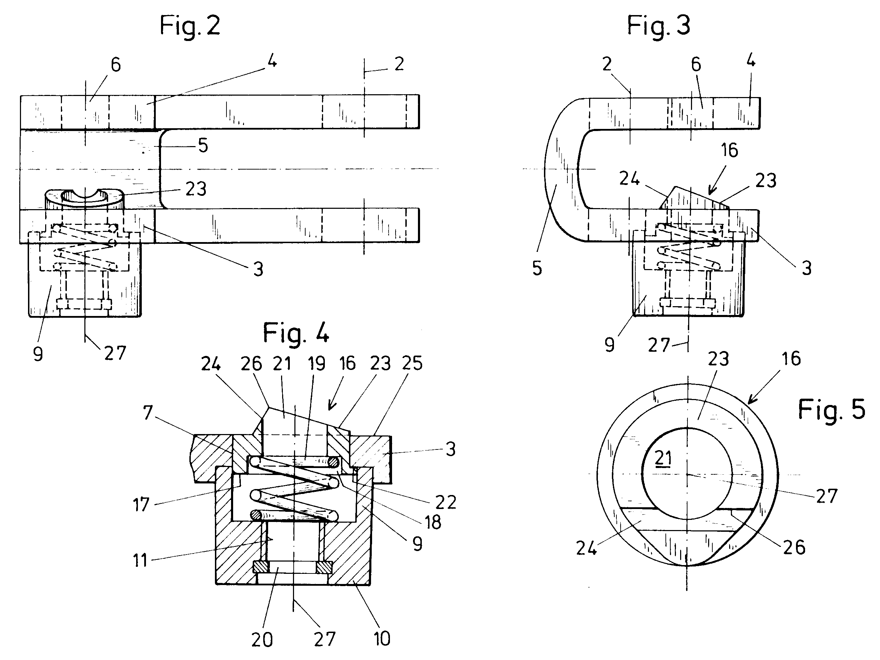

Das Kupplungsstück 1 ist in den Fig. 2 und 3 in zwei Normalrissen veranschaulicht, und Fig. 4 zeigt einen Längsschnitt durch die Buchse 9 nach der Schnittlinie IV-IV in Fig. 1 und in einem gegenüber den Fig. 2 und 3 vergrößerten Maßstab, aus der auch die Bohrung 7 ersichtlich ist. Diese Bohrung 7 besitzt einen von der Kreisform abweichenden Umfang zur Aufnahme des Riegelbolzens 16, dessen dazu korrespondierende Querschnittsform aus Fig. 5 ersichtlich ist. Diese Querschnittsform des Riegelbolzens 16 bzw. die dazu korrespondierende Querschnittsform der Bohrung 7 dient dazu, den Riegelbolzen in der Bohrung 7 verdrehsicher, jedoch axial verschiebbar zu halten. Die äußere Seite 17 des Riegelbolzens 16 besitzt eine Ausdrehung 18, in welche das eine Ende einer von der Buchse 9 aufgenommenen Schraubenfeder 19 liegt, die sich mit ihrem anderen Ende am Boden 10 der Buchse 9 abstützt, der die Gewindebohrung 11 aufweist, an deren Außenseite noch ein Sicherungsring 20 eingefügt ist.

Der Durchmesser der Längsbohrung 21 des Riegelbolzens 16 ist um ein geringes Maß größer als der Gewindeaußendurchmesser der Spannschraube 8. Die Buchse 9 kann an der Außenseite der Seitenwange 3 angeschweißt oder in diese eingepreßt sein. Der Riegelbolzen 16 besitzt eine Schulter, die als Anschlag 22 dient, der die Bewegungsmöglichkeit des Riegelbolzens 16 nach außen begrenzt. Die Schraubenfeder 19, die Längsbohrung 21 und die Gewindebohrung 11 liegen fluchtend zueinander, und die hier besprochenen Teile sind so bemessen, daß die Schraubenfeder 19 in der aus Fig. 4 ersichtlichen Stellung des Riegelbolzens 16 vorgespannt ist.

Die innere Stirnseite des Riegelbolzens 16 weist zwei keilförmige Schrägen 23 und 24 auf. Die äußere Schräge 23 steigt gegen den Steg 5 des Kupplungsstückes 1 hin an und geht - bei am Anschlag 22 anliegenden Riegelbolzen 16 (Fig. 4) - von der Innenseite 25 der einen Seitenwange 3 aus. Die andere Schräge 24 geht von der dem Steg 5 des Kupplungsstückes 1 zugewandten Seite aus und steigt nach außen hin an. Auf die Ebene der Innenseite 25 der Seitenwange 3 bezogen ist der Neigungswinkel der inneren Schräge 24 erheblich größer als der Neigungswinkel der äußeren Schräge 23. Die Verschneidungslinie 26 oder der Scheitel der beiden Schrägen 23 und 24, die zur Mittellängsachse des Kupplungsstückes 1 im wesentlichen parallel verläuft, bildet eine Sehne zum Querschnitt der Längsbohrung 21 des Riegelbolzens 16 bzw. schneidet diese Längsbohrung (Fig. 5).

Dabei liegt diese Sehne, bezogen auf die Längsmittelachse 27 der Längsbohrung 21, auf der dem Steg 5 zugewandten Seite, wobei der Normalabstand dieser Sehne von der Längsmittelachse 27 der Längsbohrung 21 größer ist als der Normalabstand dieser Sehne von der dazu parallel und unmittelbar benachbart liegenden Tangentialebene am Umfang der Längsbohrung 21. Das Verhältnis dieser Normalabstände kann auch umgekehrt sein, wesentlich ist, daß die Verschneidungslinie 26 den Bohrungskreis schneidet.

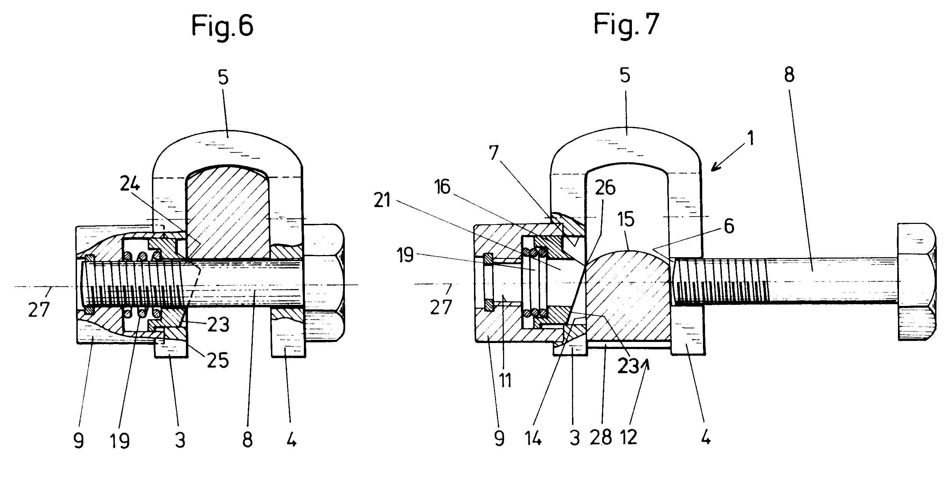

Aus Fig. 6 ist auch erkennbar, daß der Abstand der Verschneidungslinie (26) der beiden Schrägen (23, 24) vom Steg (5) des Kupplungsstückes (1) um ein geringes Maß größer ist als die in oder parallel zur Längsmittelebene des Kupplungsstückes gemessene Höhe des von demselben aufzunehmenden Wellenzapfens (12).

Soweit zum Aufbau dieser Einrichtung.

Bei der bestimmungsgemäßen Verwendung ist das Lenkgetriebe mit dem Wellenzapfen 12 in einem Kraftfahrzeug fest montiert, ebenso die Lenksäule, wobei vorerst das Kupplungsstück 1 um die Achse 2 zur Seite geschwenkt ist, da die Platzverhältnisse oft sehr beengt sind, so daß die Kupplungsglieder von der Seite zugeführt werden müssen. Die erfindungsgemäße Einrichtung ist so konzipiert, daß sie mit nur einer Hand montiert werden kann. Unter den geschilderten räumlichen Voraussetzungen wird nun in der Folge das Kupplungsstück 1 eingeschwenkt, wobei der Abschnitt 13 des Wellenzapfens 12 zwischen die Seitenwangen 3 und 4 gelangt, wie dies Fig. 7 schematisch veranschaulicht, und dabei drückt dieser Abschnitt 13 den Riegelbolzen 16 gegen die Kraft der Feder 19 nach außen, bis der Abschnitt 13 den Riegelbolzen 16 zur Gänze überfahren hat (Fig. 6), worauf der Riegelbolzen 16 durch die Feder 19 wiederum vorgeschoben wird. Dabei drückt die innere Schräge 24 auf die Seitenkante des Abschnittes 13 und sorgt dafür, daß dieser Abschnitt 13 zuverlässig auf den Steg 5 gedrückt wird. Nun wird die Spannschraube 8 seitlich eingeführt und in das Gewinde 11 eingeschraubt und festgezogen. Diese Spannschraube 8 kann nur dann eingesetzt werden, wenn der Abschnitt 13 des Wellenzapfens 12 die für ihn vorgesehene Lage eingenommen hat (Fig. 6), widrigenfalls durch die Ausbildung der beiden Schrägen 23 und 24 und durch die Lage der Verschneidungslinie 26 gegenüber dem Querschnitt der Längsbohrung 21 die Spannschraube nicht eingeschoben werden kann, da der Abschnitt 13 des Wellenzapfens 12 sozusagen im Wege stehen würde. Würde der Abschnitt 13 des Wellenzapfens 12 nicht seine vorgesehene Lage bei der Montage einnehmen, sondern mit seiner unteren Längskante an der Verschneidungslinie 26 anstehen, so wird er in der Folge, wenn die Schraube 8 eingesetzt und angezogen wird, in seine vorgesehene Lage gedrückt.

Alle diese Montagevorgänge lassen sich mit einer Hand ausführen, und dies auch unter sehr begrenzten Platzverhältnissen. Dank der erfindungsgemäßen Konstruktion ist die Feder 19 praktisch unverlierbar festgehalten, und darüberhinaus ist die Spannschraube nur dann einsetzbar, wenn der erwähnte Abschnitt 13 des Wellenzapfens 12 seine ihm zugeordnete Lage tatsächlich eingenommen hat, so daß diese Verbindung nicht nur mit einer einzigen Hand zusammengesetzt und ordnungsgemäß fertiggestellt werden kann, diese Einhand-Montage kann auch ausgeführt werden, ohne daß auf die Teile geblickt werden muß. Unter diesen Voraussetzungen kann diese Montage sogar automatisiert werden. Dank der Erfindung ist in allen Fällen sichergestellt, daß nach dem Zusammenfügen der Teile bzw. nach der Montage der Schraube 8 die Wellen bzw. deren Achsen fluchtend zueinander liegen.

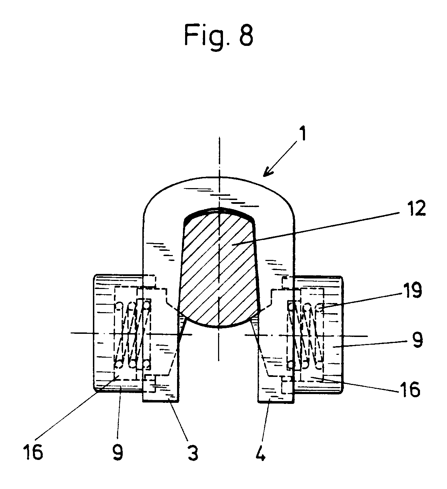

Eine automatisierte Montage wird dann vor allem ermöglicht, wenn die Einrichtung so ausgebildet ist, wie dies Fig. 8 veranschaulicht. Hier trägt das im Querschnitt U-förmige Kupplungsstück 1 an seinen beiden Seitenwangen 3 und 4 federbelastete Riegelbolzen 16, die in jener Weise ausgebildet und gelagert sind, wie dies im Zusammenhang mit dem vorstehend beschriebenen Ausführungsbeispiel erläutert wurde. Dabei können aber hier diese Riegelbolzen auch einen massiven Querschnitt haben, da bei dieser Konstruktion keine Spannschraube mehr vonnöten ist. Zweckmäßigerweise besitzen sowohl die Wangen 3 und 4 wie auch der Wellenzapfen 12 seitliche Wangen mit einem keilförmigen Anzug, wobei die zusammenwirkenden Abschnitte der mit einander verbundenen Konstruktionsteile genau bearbeitet bzw. gefertigt sind. Wird der Wellenzapfen 12 von der Seite her in das im Querschnitt U-förmige Kupplungsstück eingedrückt, so weichen vorerst die beiden Riegelbolzen 16 gegen die Kraft der beiden Federn seitlich aus. Sobald die untere Kante des Wellenzapfens 12 die Verschneidungslinie 26 an der Stirnseite der Riegelbolzen 16 überfahren hat, drücken diese Federn über die Schräge 24 der Riegelbolzen den Wellenzapfen 12 in seine konstruktiv vorgesehene Lage und halten ihn in dieser Lage auch fest. Der Neigungswinkel der Schräge 24 ist so groß bemessen, daß diese Schräge selbsthemmend wirkt, der Wellenzapfen kann also nicht mehr seitlich aus dem U-förmigen Kupplungsstück ausweichen. Auf diesem Wege kann die Montage vollautomatisiert werden.

| Legende zu den Hinweisziffern: | | | |
|---|---|---|---|
| 1 | Kupplungsstück | 15 | bombierte Fläche |
| 2 | Querachse | 16 | Riegelbolzen |
| 3 | Seitenwange | 17 | Außenseite |
| 4 | Seitenwange | 18 | Ausdrehung |
| 5 | Steg | 19 | Schraubenfeder |
| 6 | Bohrung | 20 | Sicherungsring |
| 7 | Bohrung | 21 | Längsbohrung |
| 8 | Spannschraube | 22 | Anschlag |
| 9 | Buchse | 23 | Schräge |
| 10 | Boden | 24 | Schräge |
| 11 | Gewindebohrung | 25 | Innenseite |
| 12 | Wellenzapfen | 26 | Verschneidungslinie |
| 13 | Abschnitt | 27 | Längsmittelachse |
| 14 | plane Fläche | 28 | Einzug |

## Patentansprüche

1. Einrichtung zum Verbinden einer Lenksäule eines Kraftfahrzeuges mit einem Wellenzapfen (12) eines Lenkgetriebes, wobei die Einrichtung ein im Querschnitt U-förmiges Kupplungsstück aufweist, das um eine Querachse (2) schwenkbar an der Lenksäule angelenkt ist, und in mindestens einer Seitenwange eine Bohrung vorgesehen ist mit einem gegen Verdrehung gesicherten Riegelbolzen, der durch die Kraft einer Feder gegen einen Anschlag gedrückt ist, und dessen innere Stirnseite als eine erste, keilförmig verlaufende Schräge (23) ausgebildet ist, wobei - bei am Anschlag anliegenden Riegelbolzen - die erste keilförmige Schräge (23), ausgehend von der Innenseite (25) der einen Seitenwange (3), gegen den die Seitenwangen (3, 4) verbindenden Steg (5) des Kupplungsstückes (1) ansteigt, dadurch gekennzeichnet, daß die innere Stirnseite des Riegelbolzens (16) eine zweite, keilförmige, Schräge (24) aufweist, welche von der dem Steg (5) des im Querschnitt U-förmigen Kupplungsteiles (1) zugewandten Seite des Riegelbolzens (16) ausgeht und deren Steigung derjenigen der ersten keilförmigen Schräge (23) entgegengesetzt ist, wobei der auf die Ebene der Innenseite (25) der Wange (3) bezogene Neigungswinkel der zweiten Schräge (24) größer ist als der der ersten Schräge (23).

2. Einrichtung nach Anspruch 1, dadurch gekennzeichnet, daß in beiden Seitenwangen des U-förmigen Kupplungsstückes Riegelbolzen in symmetrischer und fluchtender Anordnung vorgesehen sind.

3. Einrichtung nach Anspruch 1 oder 2, dadurch gekennzeichnet, daß an der Außenseite der den Riegelbolzen (16) tragenden Seitenwange (3) des Kupplungsstückes (1) eine die den Riegelbolzen (16) aufnehmende Bohrung (7) überdeckende Buchse (9) befestigt ist und in dieser Buchse (9) eine Schraubenfeder (19) liegt, die sich einerseits am Boden (10) der Buchse (9) und andererseits an der Außenseite des Riegelbolzens (16) abstützt.

4. Einrichtung nach Anspruch 1, dadurch gekennzeichnet, daß in an sich bekannter Weise in der einen Seitenwange ein Riegelbolzen gelagert (16) ist und die andere Seitenwange eine Bohrung zur Aufnahme einer Spannschraube (8) aufweist, und im Boden (10) der Buchse (9) eine zur Längsbohrung (21) des Riegelbolzens fluchtend liegende Gewindebohrung (11) für die Spannschraube (8) vorgesehen ist, wobei der Durchmesser der Längsbohrung (21) des Riegelbolzens (16) gleich oder um ein geringes Maß größer ist als der Außendurchmesser der Gewindebohrung (11) im Boden (10) der Buchse (9).

5. Einrichtung nach einem der Ansprüche 1 bis 4, dadurch gekennzeichnet, daß die gerade Verschneidungslinie (26) der beiden Schrägen (23, 24), die zur mittleren Längsachse des Kupplungsstückes (1) im wesentlichen parallel verläuft, eine gedachte Sehne zum Querschnitt der Längsbohrung (21) des Riegelbolzens (14) bildet.

6. Einrichtung nach Anspruch 5, dadurch gekennzeichnet, daß - bezogen auf die Längsmittelachse (27) der Längsbohrung (21) - die gedachte Sehne auf der dem Steg (5) zugewandten Seite liegt.

7. Einrichtung nach Anspruch 6, dadurch gekennzeichnet, daß der Normalabstand der gedachten Sehne von der Längsmittelachse (27) der Längsbohrung (21) größer ist als der Normalabstand dieser Sehne von der dazu parallel und unmittelbar benachbart liegenden Tangentialebene am Umfang der Längsbohrung (21). (Fig. 5)

8. Einrichtung nach einem der Ansprüche 1 bis 7, dadurch gekennzeichnet, daß der Abstand der Verschneidungslinie (26) der beiden Schrägen (23, 24) vom Steg (5) des Kupplungsstückes (1) um ein geringes Maß größer ist als die in oder parallel zur Längsmittelebene des Kupplungsstückes gemessene Höhe des von demselben aufzunehmenden Wellenzapfens (12). (Fig. 6)

9. Einrichtung nach Anspruch 1, dadurch gekennzeichnet, daß an der Außenseite der Gewindebohrung (11) im Boden (10) der Buchse (9) ein Sicherungsring (20) für die Spannschraube (8) liegt.

10. Einrichtung nach Anspruch 1, dadurch gekennzeichnet, daß die Innenseiten des U-förmigen Kupplungsstückes (1) und die seitlichen Begrenzungsflächen des Wellenzapfens (12) korrespondierende Neigungen bzw. Anzüge aufweisen. (Fig. 8)

## Claims

1. Device for connecting a steering column of a motor vehicle to a shaft journal (12) of a steering gear, the device having a coupling piece which is U-shaped in cross-section and which is coupled to the steering column to be pivotal about a transverse axis (2), and there being provided in at least one lateral cheek a bore having a tie bolt which is secured against rotation and which is pressed against a stop by the force of a spring and whereof the inner end side is constructed as a first slope (23) running in the manner of a wedge, in the case of tie bolts bearing against the stop the first wedge-shaped slope (23), starting from the inner side (25) of the one lateral cheek (3), rising towards the web (5) of the coupling piece (1) connecting the lateral cheeks (3, 4), characterized in that the inner end side of the tie bolt (16) has a second, wedge-shaped, slope (24) which starts from the side of the tie bolt (16) facing the web (5) of the coupling part (1) which is U-shaped in cross-section and the rising direction of this slope (24) is opposite to that of the first wedge-shaped slope (23), the angle of inclination of the second slope (24) with respect to the plane of the inner side (25) of the cheek (3) is greater than that of the first slope (23).

2. Device according to Claim 1, characterized in that tie bolts are provided in a symmetrical and flush arrangement in both lateral cheeks of the U-shaped coupling piece.

3. Device according to Claim 1 or 2, characterized in that a sleeve (9) covering the bore (7) receiving the tie bolt (16) is secured to the outer side of the lateral cheek (3) of the coupling piece (1) bearing the tie bolt (16) and a helical spring (19) which is supported on the one hand against the base (10) of the sleeve (9) and on the other hand against the outer side of the tie bolt (16) is located in this sleeve (9).

4. Device according to Claim 1, characterized in that in a manner known per se a tie bolt is mounted (16) in the one lateral cheek and the other lateral cheek has a bore for receiving a tensioning screw (8), and a threaded bore (11) for the tensioning screw (8) lying flush with respect to the longitudinal bore (21) of the tie bolt is provided in the base (10) of the sleeve (9), the diameter of the longitudinal bore (21) of the tie bolt (16) being equal to or slightly larger than the external diameter of the threaded bore (11) in the base (10) of the sleeve (9).

5. Device according to one of Claims 1 to 4, characterized in that the straight intersection line (26) of the two slopes (23, 24), which runs substantially parallel to the central longitudinal axis of the coupling piece (1), forms an imaginary chord with respect to the cross-section of the longitudinal bore (21) of the tie bolt (14).

6. Device according to Claim 5, characterized in that - in relation to the longitudinal centre axis (27) of the longitudinal bore (21) - the imaginary chord is located on the side facing the web (5).

7. Device according to Claim 6, characterized in that the normal spacing of the imaginary chord from the longitudinal centre axis (27) of the longitudinal bore (21) is greater than the normal spacing of this chord from the tangential plane which is parallel thereto and located directly adjacent thereto, at the periphery of the longitudinal bore (21). (Fig. 5)

8. Device according to one of Claims 1 to 7, characterized in that the spacing of the intersection line (26) of the two slopes (23, 24) from the web (5) of the coupling piece (1) is slightly larger than the height, measured in or parallel to the longitudinal centre plane of the coupling piece, of the shaft journal (12) receiving the same. (Fig. 6).

9. Device according to Claim 1, characterized in that a securing ring (20) for the tensioning screw (8) is located on the outer side of the threaded bore (11) in the base (10) of the sleeve (9).

10. Device according to Claim 1, characterized in that the inner sides of the U-shaped coupling piece (1) and the lateral delimitation surfaces of the shaft journal (12) have corresponding inclinations or slopings. (Fig. 8)

## Revendications

1. Dispositif pour relier une colonne de direction d'un véhicule à moteur à un téton d'arbre (12) d'un boîtier de direction, dans lequel le dispositif présente une pièce d'accouplement en forme d'U, qui est articulée sur la colonne de direction de façon à pouvoir pivoter autour d'un axe transversal (2) et qui est pourvu dans au moins une joue latérale d'un verrou bloqué contre toute rotation, comprimé par la force d'un ressort contre une butée et dont la face frontale intérieure est constituée sous la forme d'un premier chanfrein s'étendant en forme de coin (23), le premier chanfrein en forme de coin (23) - quand le verrou repose sur la butée - allant en croissant, en partant de la face intérieure (25) de l'une des joues latérales (3), vers l'entretoise (5) reliant les joues latérales (3, 4) de la pièce d'accouplement (1), caractérisé en ce que la face frontale intérieure du verrou (16) présente un deuxième chanfrein (24), en forme de coin, qui part de la face du verrou (16) tournée vers l'entretoise (5) de la pièce d'accouplement (1) ayant la forme d'un U en section transversale et dont la pente est en sens opposé de celle du premier chanfrein en forme de coin (23), l'angle d'inclinaison du deuxième chanfrein (24) par rapport au plan, de la face intérieure (25) de la joue (3) étant plus grand que celui du premier chanfrein (23).

2. Dispositif selon la revendication 1, caractérisé en ce que dans les deux faces latérales de la pièce d'accouplement qui a la forme d'un U on prévoit des verrous selon une disposition symétrique et venant en alignement.

3. Dispositif selon la revendication 1 ou 2, caractérisé en ce que sur la face extérieure de la joue latérale (3) de la pièce d'accouplement (1), portant le verrou (16), on fixe une douille (9) qui recouvre le perçage (7) recevant le verrou (16) et dans cette douille (9) se trouve un ressort hélicoïdal (19), qui s'appuie d'une part sur le fond (10) de la douille (9) et d'autre part, sur la face extérieure du verrou (16).

4. Dispositif selon la revendication 1, caractérisé en ce que l'on monte d'une manière connue en soi un verrou (16) dans l'une des joues latérales et en ce que l'autre joue latérale présente un perçage pour recevoir un boulon de serrage (8) et dans le fond (10) de la douille (9) on prévoit un alésage fileté (11), venant en alignement avec l'alésage longitudinal (21) du verrou, pour le boulon de serrage (8), le diamètre de l'alésage longitudinal (21) du verrou (16) étant égal ou légèrement plus grand que le diamètre extérieur de l'alésage fileté (11) dans le fond (10) de la douille (9).

5. Dispositif selon l'une des revendications 1 à 4, caractérisé en ce que la ligne droite d'intersection (26) des deux chanfreins (23, 24), qui s'étend de façon sensiblement parallèle à l'axe longitudinal médian de la pièce d'accouplement (1) forme une corde imaginaire par rapport à la section transversale de l'alésage longitudinal (21) du verrou (16).

6. Dispositif selon la revendication 5, caractérisé en ce que par rapport à l'axe longitudinal médian (27) de l'alésage longitudinal (21), la corde imaginaire se trouve sur le côté tourné vers l'entretoise (5).

7. Dispositif selon la revendication 6, caractérisé, en ce que la distance normale de la corde imaginaire depuis l'axe longitudinal médian (27) de l'alésage longitudinal (21) est plus grande que la distance normale de cette corde depuis le plan tangentiel parallèle à cela et se trouvent directement à côté sur le pourtour de l'alésage longitudinal (21) (figure 5).

8. Dispositif selon l'une des revendications 1 à 7, caractérisé en ce que la distance de la ligne d'intersection (26) des deux chanfreins (23, 24) par rapport à l'entretoise (5) de la pièce d'accouplement (1) est légèrement plus grande que la hauteur mesurée dans le plan longitudinal médian de la pièce d'accouplement ou parallèlement à celui-ci du téton d'arbre (12) à recevoir par cette pièce (figure 6).

9. Dispositif selon la revendication 1, caractérisé en ce que sur le côté extérieur de l'alésage fileté (11) dans le fond (10) de la douille (9) se trouve une bague de sécurité (20) pour le boulon de serrage (8).

10. Dispositif selon la revendication 1, caractérisé en ce que les côtés intérieurs de la pièce d'accouplement (1) en forme d'U et les faces latérales de délimitation du téton d'arbre (12) présentent des inclinaisons ou des conicités correspondantes (figure 8).
